Europäisches Patentamt

(19) European Patent Office

Office européen des brevets

(11) Numéro de publication: **0 071 533**
**B1**

(12) **FASCICULE DE BREVET EUROPEEN**

(45) Date de publication du fascicule du brevet:
**29.10.86**

(51) Int. Cl.⁴: **A 23 B 7/14**, A 23 B 7/152

(21) Numéro de dépôt: **82401399.9**

(22) Date de dépôt: **27.07.82**

(54) **Produit permettant la dégradation de l'éthylène présent dans les enceintes de conservation des fruits.**

(30) Priorité: **27.07.81 FR 8114693**

(43) Date de publication de la demande:
**09.02.83 Bulletin 83/6**

(45) Mention de la délivrance du brevet:
**29.10.86 Bulletin 86/44**

(84) Etats contractants désignés:
**AT BE CH DE GB IT LI LU NL SE**

(56) Documents cités:
**FR - A - 2 394 988**
**FR - A - 2 409 009**
**US - A - 4 235 750**

**HORT SCIENCE, vol.5, no.1, février 1970, F.W. LIU:
"Storage of bananas in polyethylene bags with an
ethylene absorbent", pages 25,26**
**CHEMICAL ABSTRACTS, vol.95, no.2, juillet 1981, page
536, résumé no. 23182m, Columbus, Ohio (US)**
**CHEMICAL ABSTRACTS, vol.95, no.1, juillet 1981, page
519, résumé no.5329k, Columbus, Ohio (US), E.B.
ESGUERRA et al.: "Regulation of fruit ripening. II. Use
of Perlite-potassium permanganate insert as an
ethylene absorbent"**
**CHEMICAL ABSTRACTS, vol.92, no.11, mars 1980, page
475, résumé no.92988d, Columbus, Ohio (US)**
**L.F.Fieser/M.Fieser, Lehrbuch der organischen Chemie,
1955, page 70**

(73) Titulaire: **L'Institut National Polytechnique de Toulouse
(I.N.P.), Place des Hauts-Murats B.P. 354,
F-31006 Toulouse Cedex (FR)**
Titulaire: **Centre d'Expérimentation Fruits et Légumes
Société d'Intérêt Collectif Agricole, Domaine de Capou,
F-82000 Montauban (FR)**

(72) Inventeur: **Pech, Jean-Claude, 45, rue Saint-Roch,
F-31400 Toulouse (FR)**
Inventeur: **Latche, Alain, 30, rue Henri Dunant,
F-31100 Toulouse (FR)**
Inventeur: **Fallot, Jean, 4, Allées de Buffe-vent,
F-31000 Auzeville (FR)**
Inventeur: **Lurton, Luc, 15, rue Théodore Botrel,
F-29200 Brest (FR)**

(74) Mandataire: **Barre, Philippe et al, Cabinet
Barre-Gatti-Laforgue 95 rue des Amidonniers,
F-31069 Toulouse Cédex (FR)**

## Description

La présente invention est relative au problème de la conservation des fruits par dégradation de l'éthylène présent dans l'atmosphère au moyen de permanganate de potassium.

Il est connu que les fruits émettent divers composés volatiles dont l'éthylène est quantitativement le plus important et dont le rôle est le plus actif. Une chambre de conservation à atmosphère contrôlée contenant des pommes de variétés Golden Delicious peut contenir, après quatre mois de conservation, entre 300 et 600 ppm d'éthylène. Or ce gaz est une hormone végétale accélérant les phénomènes de maturation et de sénescence des fruits. Il en résulte que sa présence dans les enceintes servant à la conservation ou au transport de fruits frais est indésirable, car elle réduit de manière sensible la durée de conservation de ces produits et en déprécie la qualité.

On peut abaisser le niveau d'éthylène par un renouvellement de l'atmosphère où sont entreposés les fruits, mais cette solution théoriquement possible dans certains cas est techniquement irréalisable.

Pour éliminer cet éthylène, on a proposé dans le brever US 3 049 399 d'employer une solution aqueuse de permanganate de potassium. Cependant, l'emploi d'un tel produit liquide est très malcommode pour des emballages tels que des caisses ou des conteneurs.

On a alors proposé de déposer le permanganate sur des supports solides tels que de la perlite ou de l'alumine activée. On a ainsi commercialisé sous la marque PURAFIL® de l'alumine activée imprégnée de permanganate de potassium: ce produit présente le double inconvénient d'être très cher et de n'avoir qu'une faible capacité d'adsorption car ce produit travaille à l'échelle moléculaire par adsorption, c'est-à-dire en réalisant un piégeage des molécules d'éthylène. On a également commercialisé un produit constitué par des perles de PERLITE imprégnées de permanganate de potassium. Il s'est avéré que ce produit se déssèche rapidement et devient inefficace car la réaction d'oxydation de l'éthylène par la permanganation nécessite la présence d'eau.

Par ailleurs, le brevet FR 2 394 988 vise un agent de conservation alimentaire pour l'absorption d'oxygène, contenant un sulfate ou chlorure métallique, un composé alcalin, un sulfite et une substance déliquescente notamment un sel hygroscopique. Le sel métallique réagit d'abord avec le sulfite pour donner de l'eau puis celle-ci réagit avec le sel métallique et le composé alcalin suivant une réaction d'absorption d'oxygène. La substance déliquescente évite que des excès d'eau provenant de la première réaction ou de l'atmosphère mouillent les aliments. L'enseignement fourni par ce brevet réside donc essentiellement dans le choix des réactifs permettant d'obtenir les deux réactions sus-évoquées; en outre, il évoque la fonction classique des sels hygroscopiques comme agents d'élimination des excès d'eau.

La présente invention vise un dispositif de conservation de fruits et végétaux par élimination de l'éthylène dégagé par ces produits lors de leur conservation ou stockage; ce dispositif est du type comprenant du permanganate et se caractérise en ce que le permanganate est mélangé en solution à un sel hygroscopique captant l'eau nécessaire à l'oxygénation de l'éthylène par le permanganate, ce mélange permanganate/sel hygroscopique étant déposé à la surface d'un support inerte.

On peut employer un support inerte n'ayant aucune action d'adsorption, comme de la Perlite par exemple, ou encore un support inerte, tel que des diatomées qui n'adsorbent pas l'eau, mais qui a une légère action d'adsorption de l'éthylène: ce gaz est alors oxydé dans le film enrobant les particules de diatomées.

Dans tous les cas, c'est l'adjonction au permanganate de sels hygroscopiques tels que le chlorure de calcium qui confère au produit selon l'invention son efficacité remarquable.

A titre d'exmeple, une expérimentation porte sur la détermination de la quantité de Ca Cl$_2$ à ajouter, a montré que les meilleurs résultats étaient obtenus avec des valeurs de:

—1 gr. à 1,5 gr. pour 1 gr. de support inerte vis-à-vis de l'éthylène,

– 1 gr, à 1,5 gr. pour 5 gr. de support adsorbant l'éthylène.

Pour réaliser le produit selon l'invention, on réalise d'abord dans les proportions voulues un mélange du permanganate sec qui se présente en une poudre de paillettes avec les diatomées qui se présentent sous la forme d'une poudre dont les particules ont approximativement les mêmes dimensions que celles du permanganate; ensuite on réalise une solution du sel hygroscopique et on incorpore cette solution de manière progressive au mélange poudreux support-permanganate.

Ces produits peuvent être utilisés de plusieurs façons:

– Lor d'une utilisation statique, le produit placé dans un sac perméable à l'air fixe l'éthylène de l'air traversant le sac;

– Lors d'une utilisation en circulation d'air, le produit est placé, en vrac ou lité, dans une colonne au travers de laquelle est pulsé l'air chargé d'éthylène. Ce dispositif permet le traitement de volumes de gaz beaucoup plus importants.

Dans le cas d'une utilisation en circuit fermé, la réaction d'oxydation et donc disparition de l'éthylène obéit à une loi de type exponentiel.

$$C = Co \exp (-kt)$$

dans laquelle:

C  = concentration à l'instant t
Co = concentration initiale
K  = constante de vitesse
T  = temps

A titre d'exemple, dans le cas d'une enceinte de 10 l, dont l'air passe à raison de 100 ml par minute à travers une cartouche de 20 mm de diamètre contenant 10 gr. de produit à la température de 20°C, les constantes de vitesse sont égales à 5,9 h$^{-1}$ pour le produit à base de support adsorbant l'éthylène et 1,1h$^{-1}$ pour le produit à base de support inerte.

Par ailleurs, la capacité totale de destruction de l'éthylène a été estimée, pour produit à base de support adsorbant l'éthylène, à 25 ml d'éthylène pour 1 gr. de produit, ce qui correspond à un rendement de 86% par rapport à l'efficacité théorique du produit, si l'on considère qu'une mole de permanganate réagit avec une mole d'éthylène.

Enfin, le produit à base de support adsorbant l'éthylène a la capacité de réduire la teneur en éthylène à des valeurs très faibles (inférieures à 10$^{-1}$ ppm), nettement inférieures à la valeur critique au-dessus de laquelle l'éthylène joue un rôle préjudiciable dans la conservation des fruits.

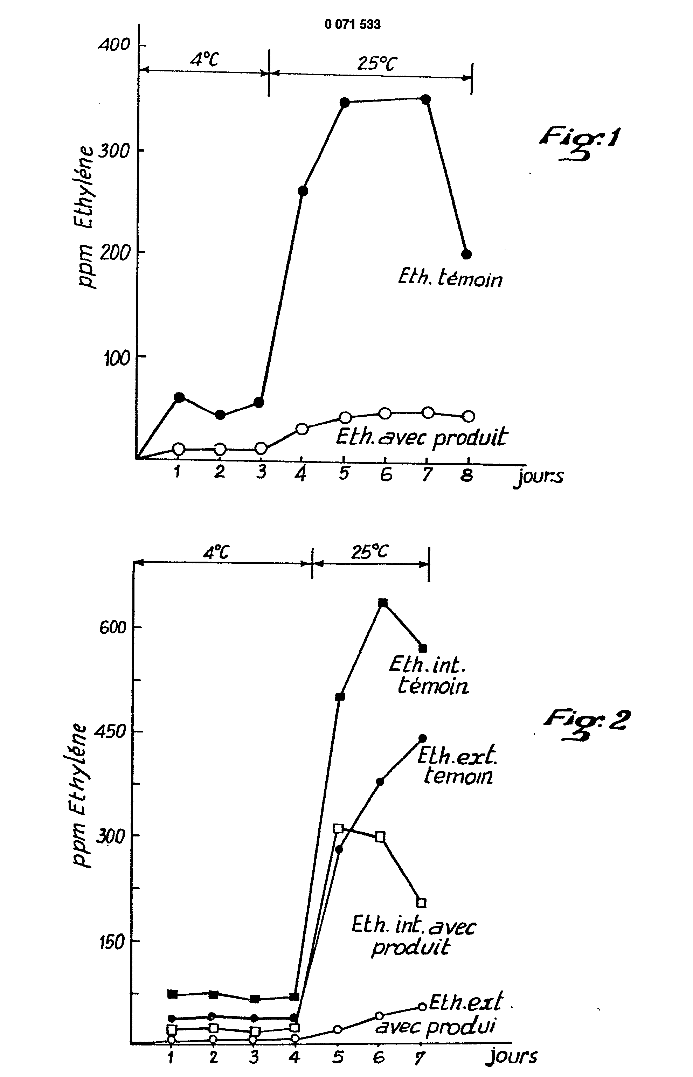

La figure 1 donne un exemple de l'efficacité de 20 gr. de produit réalisé avec le support adsorbant l'éthylène placé en condition statique dans un sachet de toile de nylon (pores de 30 µm). Dans une enceinte sphérique de 29,5 cm de diamètre, contenant 2,5 kg de pommes Golden Delicious placée à 4°C pendant 3 jours puis à 25°C, le taux d'éthylène de l'atmosphère reste considérablement plus faible en présence du produit.

La figure 2 donne un exemple de l'efficacité de 20 gr. de produit réalisé avec le support adsorbant placé en condition de circulation de l'atmosphère (débit 100 ml par minute) dans une enceinte de 19 l, contenant 2,3 kg de pommes Golden Delicious. La teneur en éthylène de l'enceinte, ainsi que celle de l'atmosphère interne du fruit, sont considérablement diminuées en présence du produit.

## Revendications

1. Dispositif pour la conservation des fruits et végétaux par élimination de l'éthylène dégagée par lesdits produits lors de leur conservation ou stockage au moyen de permanganate, caractérisé en ce que le permanganate est mélangé en solution à un sel hygroscopique captant l'eau nécessaire à l'oxygénation de l'éthylène par le permanganate, ce mélange permanganate/sel hygroscopique étant déposé à la surface d'un support inerte.

2. Dispositif selon la revendication 1, dans lequel le support sur lequel est dépcsé le mélange de permanganate et de sel hygroscopique est un support n'adsorbant pas l'eau.

3. Dispositif selon la revendication 1 ou 2, dans lequel le permanganate peut être du permanganate de potassium, de soidum, magnésium, calcium, baryum ou lithium.

4. Dispositif selon l'une quelconque des revendications 1 à 3, dans lequel le sel hygroscopique est constitué par des chlorure, nitrate, carbonate, sulfate de calcium, magnésium, sodium, potassium ou des hydrures de calcium ou de magnésium ou des polyphosphates, sels de l'acide tripoly phosphorique.

5. Dispositif selon l'une quelconque des revendications précédentes, dans lequel le support est constitué par de la perlite.

6. Dispositif selon l'une quelconque des revendications 1 à 4, dans lequel le support est constitué par des diatomées.

7. Dispositif selon la revendication 5, caractérisé en ce que pour 1 gr. de support inerte, il comporte 1 gr. de permanganate de potassium et 1 gr. à 1,5 g de chlorure de calcium.

8. Dispositif selon la revendication 6, caractérisé en ce que pour 5 gr. de diatomées, il comporte 2,5 gr. de permanganate et 1 gr. à 1,5 gr. de chlorure de calcium.

9. Dispositif selon l'une quelconque des revendications précédentes, caractérisé par le fait qu'il est obtenu en réalisant d'abord dans les proportions voulues un mélange sec du permanganate en poudre et de diatomées, puis on incorpore de manière progressive à ce mélange une solution d'un sel hygroscopique.

## Claims

1. Device for the conservation of fruit and vegetables by elemination of the ethylene given off by the said products during their conservation or storage by means of permanganate, characterized by the fact that the permanganate is mixed in solution with a hygroscopic salt capting the moisture required for the oxygenation of the ethylene by the permanganate/hygroscopic salt mixture being placed on the surface of an inert support.

2. Device in accordance with claim 1, wherein the support on which the permanganate /hygroscopic salt mixture is placed is a support which does not adsorb water.

3. Device in accordance with claim 1 or 2, wherein the permanganate max be Potassium, Sodium, Magnesium, Calcium, Barium or Lithium permanganate.

4. Device in accordance with any of the claims 1 through 3, wherein the hygroscopic salt consists of chloride, nitrate, carbonate, calcium sulfate, magnesium, sodium, potassium or calcium or magnesium hydrides or polyphosphates, tripoly phosphoric acid salts.

5. Device in accordance with any of the foregoing claims, wherein the support consists of perlite.

6. Device in accordance with any of the claims 1 through 4, wherein the support consists of diatoma.

7. Device in accordance with claim 5, characterized in the fact that for 1 g. of inert support, it comprises 1 g. of potassium permanganate and 1 g. to 1.5 g. of calcium chloride.

8. Device in accordance with claim 6, characterized in the fact that for 5 g. of diatoma, it comprises 2.5 g. of permanganate and 1 g. to 1.5 g. of calcium chloride.

9. Device in accordance with any of the foregoing claims, characterized by the fact that it is obtained by producing first of all a dry mixture of powdered permanganate and diatoma in the desired proportions, then by a hygroscopic salt solution being gradually incorporated into this mixture.

## Patentansprüche

1. Vorrichtung zur Konservierung von Obst und Gemüse durch die Zersetzung des von diesen Produkten im Verlauf ihrer Konservierung oder Lagerung abgeschiedenen Äthylens mit Hilfe von Permanganat, dadurch gekennzeichnet, dass das Permanganat als Lösung mit einem hygroskopischen Salz gemischt wird, welches das für das Oxydieren des Äthylens durch das Permanganat erforderliche Wasser anzieht; diese Mischung Permanganat/hygroskopisches Salz wird auf der Oberfläche eines neutralen Trägers angebracht.

2. Vorrichtung gemäss Anspruch 1, bei dem es sich bei dem Träger, auf dem die Mischung aus Permanganat und hygroskopischen Salz angebracht wird, um ein Material handelt, das kein Wasser adsorbiert.

3. Vorrichtung gemäss Anspruch 1 oder 2, bei dem es sich bei dem Permanganat um Kaliumpermanganat, Natriumpermanganat, Magnesiumpermanganat, Kalziumpermanganat, Baryumpermanganat oder Lithiumpermanganat handeln kann.

4. Vorrichtung gemäss einem der Ansprüche 1 bis 3, bei dem das hygroskopische Salz aus Kalzium-, Magnesium-, Natrium- oder Kaliumchlorid, -nitrat, -karbonat oder -sulfat oder aus Kalzium- oder Magnesiumhydrid oder aus Polyphosphaten, Salzen der Tripoly-Phosphorsäure, bestehen kann.

5. Vorrichtung gemäss einem der vorstehenden Ansprüche, bei der der Träger aus Perlit besteht.

6. Vorrichtung gemäss einem der Ansprüche 1 bis 4, bei der der Träger aus Kieselalgen besteht.

7. Vorrichtung gemäss Anspruch 5, dadurch gekennzeichnet, dass sie für 1 Gramm neutralen Träger 1 Gramm Kaliumpermanganat und 1 bis 1,5 Gramm Kalziumchlorid aufweist.

8. Vorrichtung gemäss Anspruch 6, dadurch gekennzeichnet, dass sie für 5 Gramm Kieselalgen 2,5 Gramm Permanganat und 1 bis 1,5 Gramm Kalziumchlorid aufweist.

9. Vorrichtung gemäss einem der vorstehenden Ansprüche, dadurch gekennzeichnet, dass für ihre Herstellung zuerst eine trockene Mischung aus Permanganat in Pulverform und Kieselalgen im gewünschten Verhältnis hergestellt wird, in welche dann allmählich eine Lösung eines hygroskopischen Salzes eingebracht wird.

0 071 533

Fig. 1

ppm Ethyléne

400
300
200
100

4°C    25°C

Eth. témoin

Eth. avec produit

1  2  3  4  5  6  7  8    jours

Fig. 2

ppm Ethyléne

600
450
300
150

4°C    25°C

Eth. int. témoin

Eth. ext. témoin

Eth. int. avec produit

Eth. ext. avec produi

1  2  3  4  5  6  7    jours